# EUROPEAN PATENT APPLICATION

(11) **EP 4 456 633 A1**
(43) Date of publication of application: **30.10.2024**
(21) Application number: 22909904.9
(22) Date of filing: 19.12.2022
(51) Int. Cl.: H04W 72/04

(54) **TRANSMISSION DETERMINATION METHOD AND APPARATUS, TERMINAL, NETWORK SIDE DEVICE, AND STORAGE MEDIUM**

(30) Priority: 22.12.2021 CN 202111581169
(71) Applicant: VIVO MOBILE COMMUNICATION CO., LTD., Dongguan, Guangdong 523863 (CN)
(72) Inventor: WANG, Yong, Dongguan, Guangdong 523863 (CN); WU, Kai, Dongguan, Guangdong 523863 (CN)
(74) Representative: Lavoix
(86) International application number: PCT/CN2022/139838
(87) International publication number: WO 2023/116591

(57) **Abstract**

This application provides a transmission determining method and apparatus, a terminal, a network-side device, and a storage medium. The transmission determining method includes: receiving, by a terminal, first signaling, where the first signaling is used for determining an uplink transmission operation of the terminal on a first transmission and reception point TRP; and determining, by the terminal, an uplink transmission operation of the terminal on the first TRP according to the first signaling in a case that an overlapping time domain resource is present between an uplink transmission of the terminal on the first TRP and a downlink transmission of the terminal on a second TRP; where the terminal is connected to a plurality of TRPs, and the plurality of TRPs include the first TRP and the second TRP.

## Description

### CROSS-REFERENCE TO RELATED APPLICATIONS

This application claims priority to Chinese Patent Application No. 202111581169.7, filed in China on December 22, 2021, which is incorporated herein by reference in its entirety.

### TECHNICAL FIELD

This application pertains to the field of communications technologies, and specifically relates to a transmission determining method and apparatus, a terminal, a network-side device, and a storage medium.

### BACKGROUND

Some communication systems (such as 5G or 6G) support multiple transmission and reception point (Multi-Transmit Receiver Point, MTRP)/multi-panel (multi-panel) scenarios. In such scenarios, terminals can access a plurality of transmission and reception points (Transmit Receiver Point, TRP), and the terminals are able to receive same data or different data from the plurality of TRPs. However, when a terminal accesses a plurality of TRPs, there may be a conflict problem of overlapping resources between transmissions of the plurality of TRPs, resulting in relatively poor transmission performance of the terminal.

### SUMMARY

Embodiments of this application provide a transmission determining method and apparatus, a terminal, a network-side device, and a storage medium, so as to resolve the problem of relatively poor transmission performance of terminals.

According to a first aspect, a transmission determining method is provided, including:
receiving, by a terminal, first signaling, where the first signaling is used for determining an uplink transmission operation of the terminal on a first transmission and reception point TRP; and
determining, by the terminal, an uplink transmission operation of the terminal on the first TRP according to the first signaling in a case that an overlapping time domain resource is present between an uplink transmission of the terminal on the first TRP and a downlink transmission of the terminal on a second TRP; where
the terminal is connected to a plurality of TRPs, and the plurality of TRPs include the first TRP and the second TRP.

According to a second aspect, a transmission determining method is provided, including:
sending, by a network-side device, first signaling to a terminal, where the first signaling is used for determining an uplink transmission operation of the terminal on a first TRP in a case that an overlapping time domain resource is present between an uplink transmission of the terminal on the first TRP and a downlink transmission of the terminal on a second TRP.

According to a third aspect, a transmission determining apparatus is provided, including:
a receiving module, configured to receive first signaling, where the first signaling is used for determining an uplink transmission operation of a terminal on a first transmission and reception point TRP; and
a determining module, configured to determine an uplink transmission operation of the terminal on the first TRP according to the first signaling in a case that an overlapping time domain resource is present between an uplink transmission on the first TRP and a downlink transmission of the terminal on a second TRP; where
the terminal is connected to a plurality of TRPs, and the plurality of TRPs include the first TRP and the second TRP.

According to a fourth aspect, a transmission determining apparatus is provided, including:
a sending module, configured to send first signaling to a terminal, where the first signaling is used for determining an uplink transmission operation of the terminal on a first TRP in a case that an overlapping time domain resource is present between an uplink transmission of the terminal on the first TRP and a downlink transmission of the terminal on a second TRP.

According to a fifth aspect, a terminal is provided, including a processor, a memory, and a program or instructions stored in the memory and capable of running on the processor. When the program or the instructions are executed by the processor, the steps of the transmission determining method on the terminal side provided in this application are implemented.

According to a sixth aspect, a terminal is provided, including a processor and a communication interface. The communication interface is configured to receive first signaling, where the first signaling is used for determining an uplink transmission operation of the terminal on a first TRP. The processor or the communication interface is configured to determine an uplink transmission operation of the terminal on the first TRP according to the first signaling in a case that an overlapping time domain resource is present between an uplink transmission of the terminal on the first TRP and a downlink transmission of the terminal on a second TRP; where the terminal is connected to a plurality of TRPs, and the plurality of TRPs include the first TRP and the second TRP.

According to a seventh aspect, a network-side device is provided, including a processor, a memory, and a program or instructions stored in the memory and capable of running on the processor. When the program or the instructions are executed by the processor, the steps of the transmission determining method on the network-side device side provided in this application are implemented.

According to an eighth aspect, a network-side device is provided, including a processor and a communication interface. The communication interface is used for sending first signaling to a terminal, where the first signaling is used for determining an uplink transmission operation of the terminal on a first TRP in a case that an overlapping time domain resource is present between an uplink transmission of the terminal on the first TRP and a downlink transmission of the terminal on a second TRP.

According to a ninth aspect, a communication system is provided, including: a terminal and a network-side device, where the terminal may be configured to perform the steps of the transmission determining method according to the first aspect, and the network-side device may be configured to perform the steps of the transmission determining method according to the second aspect.

According to a tenth aspect, a readable storage medium is provided, where a program or instructions are stored in the readable storage medium, and when the program or the instructions are executed by a processor, the steps of the transmission determining method on the terminal side are implemented, or the steps of the transmission determining method on the network-side device side are implemented.

According to an eleventh aspect, a chip is provided, where the chip includes a processor and a communication interface, the communication interface is coupled to the processor, and the processor is configured to run a program or instructions to implement the transmission determining method on the terminal side or the transmission determining method on the network-side device side.

According to a twelfth aspect, a computer program product is provided, where the computer program product is stored in a storage medium, and the computer program product is executed by at least one processor to implement the steps of the transmission determining method on the terminal side or the steps of the transmission determining method on the network-side device side.

In the embodiments of this application, the terminal receives the first signaling, where the first signaling is used for determining an uplink transmission operation of the terminal on the first transmission and reception point TRP; and the terminal determines an uplink transmission operation of the terminal on the first TRP according to the first signaling in a case that an overlapping time domain resource is present between the uplink transmission of the terminal on the first TRP and the downlink transmission of the terminal on the second TRP. The terminal is connected to a plurality of TRPs, and the plurality of TRPs include the first TRP and the second TRP. In this way, in a case that an overlapping time domain resource is present between the uplink transmission of the terminal on the first TRP and the downlink transmission of the terminal on the second TRP, the uplink transmission operation of the terminal on the first TRP can be determined according to the first signaling, so as to resolve the conflict problem of overlapping time domain resources of the terminal between the first TRP and the second TRP, further improving transmission performance of the terminal.

### BRIEF DESCRIPTION OF DRAWINGS

FIG. 1 is a block diagram of a wireless communication system to which the embodiments of this application are applicable;
FIG. 2 is a flowchart of a transmission determining method according to an embodiment of this application;
FIG. 3 is a flowchart of another transmission determining method according to an embodiment of this application;
FIG. 4 is a structural diagram of a transmission determining apparatus according to an embodiment of this application;
FIG. 5 is a structural diagram of another transmission determining apparatus according to an embodiment of this application;
FIG. 6 is a structural diagram of a communication device according to an embodiment of this application;
FIG. 7 is a structural diagram of a terminal according to an embodiment of this application; and
FIG. 8 is a structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the terms used in this way are interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communication system.

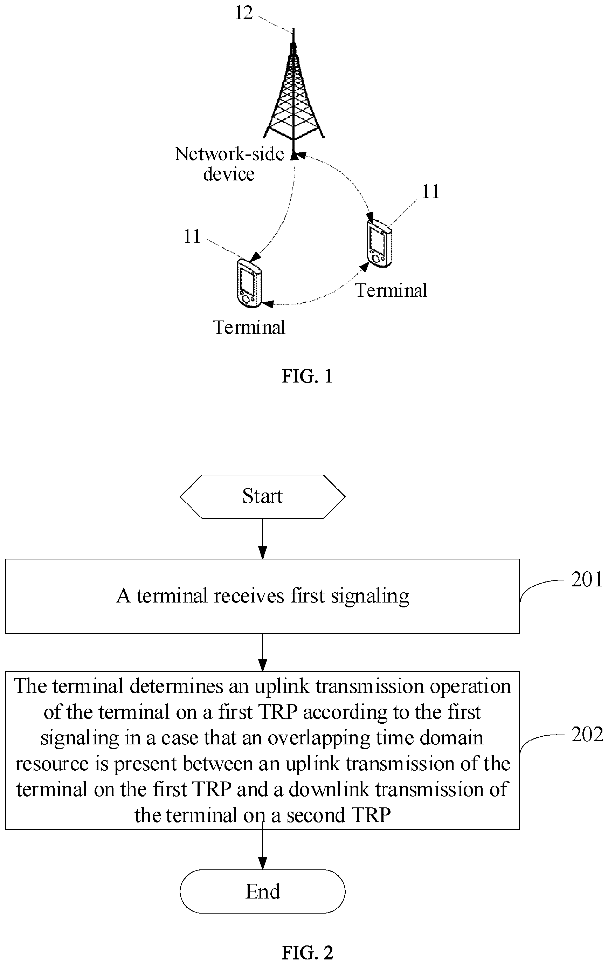

FIG. 1 is a block diagram of a wireless communication system to which the embodiments of this application are applicable. The wireless communication system includes a terminal 11 and a network-side device 12.

In the embodiments of this application, the terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device, WD), vehicle user equipment (Vehicle User Equipment, VUE), pedestrian user equipment (Pedestrian User Equipment, PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. It should be noted that a specific type of the terminal is not limited in the embodiments of this application.

The network-side device 12 may include an access network device or a core network device, where the access network device may also be referred to as a radio access network device, a radio access network (Radio Access Network, RAN), a radio access network function, or a radio access network unit. The access network device may include a base station, a wireless local area network (Wireless Local Area Network, WLAN) access point, a wireless fidelity Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited. The core network device may include but is not limited to at least one of the following: a core network node, a core network function, a mobility management entity (Mobility Management Entity, MME), an access mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application service discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network storage function (Network Repository Function, NRF), a network exposure function (Network Exposure Function, NEF), a local NEF (Local NEF, or L-NEF), a binding support function (Binding Support Function, BSF), an application Function (Application Function, AF), and the like. It should be noted that, in the embodiments of this application, a core network device in an NR system is used as an example for description, and a specific type of the core network device is not limited.

With reference to the accompanying drawings, the following describes in detail, by using some embodiments and application scenarios thereof, a transmission determining method and apparatus, a terminal, a network-side device, and a storage medium provided in the embodiments of this application.

Referring to FIG. 2, FIG. 2 is a flowchart of a transmission determining method according to an embodiment of this application. As shown in FIG. 2, the method includes the following steps.

Step 201: A terminal receives first signaling, where the first signaling is used for determining an uplink transmission operation of the terminal on a first TRP.

The first signaling may be first signaling sent by the network-side device and received by the terminal, for example, the first signaling may be carried through at least one of the following:
radio resource control (Radio resource control, RRC) message, downlink control information (Downlink control information, DCI), configured grant (configured grant) message, and medium access control control element (Medium access control control element, MAC CE).

The RRC signaling may include a cell-specific (cell-specific) RRC message or a UE-specific (UE specific) RRC message, and the DCI may include scheduling DCI (scheduling DCI), activation DCI (activation DCI), or a group-common DCI (group-common DCI).

The first signaling being used for determining an uplink transmission operation of the terminal on the first TRP may be that the first signaling explicitly or implicitly indicates the uplink transmission operation of the terminal on the first TRP.

The uplink transmission operation may include: transmitting the uplink transmission of the terminal on the first TRP, for example, performing physical uplink shared channel (Physical uplink shared channel, PUSCH) transmission of the terminal on the first TRP or physical uplink control channel (Physical uplink control channel, PUCCH) transmission of the terminal on the first TRP. Alternatively, the uplink transmission operation includes not transmitting the uplink transmission of the terminal on the first TRP, for example, not performing PUSCH transmission of the terminal on the first TRP, or not performing PUSCH transmission of the terminal on the first TRP.

The first TRP is a TRP in which the uplink transmission in MTRP is located.

Step 202: The terminal determines an uplink transmission operation of the terminal on the first TRP according to the first signaling in a case that an overlapping time domain resource is present between an uplink transmission of the terminal on the first TRP and a downlink transmission of the terminal on a second TRP.

The terminal is connected to a plurality of TRPs, and the plurality of TRPs include the first TRP and the second TRP.

The overlapping time domain resource being present between the uplink transmission of the terminal on the first TRP and the downlink transmission of the terminal on the second TRP may be that part or all of time domain resources overlap between the uplink transmission and the downlink transmission, for example, at least one symbol/slot overlaps.

The determining, by the terminal, an uplink transmission operation of the terminal on the first TRP according to the first signaling may be transmitting an uplink transmission of the terminal on the TRP; or not transmitting an uplink transmission of the terminal on the TRP. The terminal may not transmit the downlink transmission of the terminal on the second TRP in a case that the uplink transmission of the terminal is transmitted at the TRP; and the terminal may transmit the downlink transmission of the terminal on the second TRP in a case that the uplink transmission of the terminal is not transmitted at the TRP.

In this embodiment of this application, through the foregoing steps, in a case that an overlapping time domain resource is present between the uplink transmission of the terminal on the first TRP and the downlink transmission of the terminal on the second TRP, the uplink transmission operation of the terminal on the first TRP can be determined according to the first signaling, so as to resolve the conflict problem of overlapping time domain resources of the terminal between the first TRP and the second TRP, further improving transmission performance of the terminal.

In an optional implementation, the first signaling is used to indicate at least one of the following:
priority information, a processing indication during resource overlapping, a physical cell identity (Physical Cell ID, PCI), and simultaneous uplink transmission on a plurality of antenna panels of the terminal.

The priority information can be used to indicate a priority of uplink transmission, or priorities between uplink transmission and downlink transmission, priorities between signals, or the like. For example, in some implementations, the priority information may include at least one of the following:
priorities between a plurality of TRPs;
priority of uplink transmission;
priorities between uplink transmission and downlink transmission; and
priorities between a plurality of synchronization signal block (Synchronization signal Block, SSB) lists, where the plurality of SSB lists correspond to a plurality of different PCIs respectively, and any one SSB list corresponds to one TRP/TRP group.

The priorities between the plurality of TRPs may be the priorities between the TRPs in an MTRP scenario. The priority of uplink transmission may be a specific priority of the uplink transmission, for example, the uplink transmission (PUSCH/PUCCH) is a higher-priority transmission. The priorities between the uplink transmission and the downlink transmission may be priorities between an uplink transmission channel/signal and a downlink transmission channel/signal, such as transmission priorities between the uplink transmission (PUSCH/PUCCH) and the SSB transmission.

The plurality of SSB lists being corresponding to a plurality of different PCIs respectively may be that one SSB list corresponds to one PCI or the plurality of SSB lists correspond to the plurality of PCIs respectively. Any one SSB list being corresponding to one TRP/TRP group may be that one TRP/TRP group corresponds to one SSB list or one TRP/TRP group corresponds to a same PCI.

Based on the priority information, the terminal can determine the uplink transmission operation of the terminal on the first TRP. For example, in a case that the uplink transmission has a higher priority than the downlink transmission, it is determined to transmit the uplink transmission of the terminal on the first TRP. In a case that the first TRP has a higher priority than the second TRP, it is determined to transmit the uplink transmission of the terminal on the first TRP. In a case that the uplink transmission has a high priority, it is determined to transmit the uplink transmission of the terminal on the first TRP. In a case that the priority of the SSB list corresponding to the first TRP is higher than that of the SSB list corresponding to the second TRP, it is determined to transmit the uplink transmission of the terminal on the first TRP. Otherwise, the terminal may not transmit the uplink transmission of the terminal on the first TRP.

The processing indication during resource overlapping may be used to indicate a specific processing operation at the terminal, so that the terminal can determine the uplink transmission operation of the terminal on the first TRP through the indication. For example, in some implementations, the processing indication during resource overlapping can be used to indicate whether to perform coderate matching/rate-matching (rate-matching) on the PDSCH in a case that an overlapping time domain resource is present between the physical downlink shared channel (Physical downlink shared channel, PDSCH) transmission on the first TRP and the SSB transmission on the second TRP. If it is indicated to perform coderate matching/rate-matching on the PDSCH in this case, the uplink transmission of the terminal on the first TRP is not transmitted; otherwise, the uplink transmission of the terminal on the first TRP is transmitted.

It should be noted that the processing indication during resource overlapping can also be used to indicate whether to perform coderate matching/rate-matching (rate-matching) on the PDSCH in a case that an overlapping time domain resource is present between the PDSCH transmission on the first TRP and an SSB transmission at another TRP, where the another TRP is one of other TRPs in the MTRP other than the first TRP, and the TRP and the first TRP may have a same PCI or different PCIs. If this indication indicates to perform coderate matching/rate-matching on the PDSCH, correspondingly, in a case that an overlapping time domain resource is present between the uplink transmission on the first TRP and the downlink transmission on the second TRP, the uplink transmission of the terminal on the first TRP is not transmitted; otherwise, it is determined to transmit the uplink transmission of the terminal on the first TRP.

The PDSCH may be a PDSCH that does not carry system information block (System Information Block, SIB) 1, that is, the PDSCH indicated by the processing indication during resource overlapping does not include a PDSCH that carries SIB1.

The first signaling may indicate a PCI explicitly or implicitly, and may indicate PCIs of one or more TRPs. In this way, the terminal can determine the uplink transmission operation on the first TRP according to the PCI indicated by the first signaling. For example, in a case that the PCI of the first TRP is different from the PCI of the second TRP, the uplink transmission of the terminal on the first TRP is transmitted; and in a case that the PCI of the first TRP is the same as the PCI of the second TRP, the uplink transmission of the terminal on the first TRP is not transmitted.

Optionally, the first signaling is used to indicate a PCI through at least one of the following:
a transmission configuration indication (Transmission configuration indication, TCI) state or a TCI state list;
a correspondence between TCI states and PCIs; and
a correspondence between TCI state lists and PCIs.

The TCI state may be a TCI state of the first TRP or the TCI state may be a TCI state of the second TRP. The TCI state list may include a TCI state of at least one of the first TRP and the second TRP.

In some implementations, the TCI state corresponds to a PCI of the first TRP, or the TCI state corresponds to a PCI of at least one TRP in the plurality of TRPs other than the first TRP; and/or
the TCI state list includes at least one TCI state, and each TCI state corresponds to a PCI of at least one TRP.

In addition, when the terminal determines a corresponding PCI based on the TCI state, the terminal can also determine a TRP with a same PCI as the first TRP based on a terminal-known correspondence between PCIs and TRPs. For example, assuming that the network indicates, by using a TCI state in DCI, that a PCI corresponding to TRP#1 is 5, if the terminal can obtain a mapping/correspondence between TRPs and PCIs in MTRP from RRC configuration and determine that a PCI corresponding to TRP#2 is also 5, it is determined that TRP#1 and TRP#2 have a same PCI.

PCIs corresponding to one or more TCI states included in the TCI state list are PCIs of TRPs in the plurality of TRPs, and one TCI state can correspond to PCIs of one or more TRPs.

In this implementation, the PCI of the TRP is determined based on the TCI state. Certainly, the first signaling can configure PCIs of part of TRPs, and PCIs of other TRPs can be determined by other means, such as being pre-configured.

In some implementations, the terminal may alternatively determine to transmit the uplink transmission of the terminal on the first TRP or determine not to transmit the uplink transmission of the terminal on the first TRP according to the indication of performing uplink transmission on a plurality of antenna panels of the terminal.

It should be noted that the priority information indicated by the first signaling, the processing indication during resource overlapping, the PCI, and the simultaneous uplink transmission on the plurality of antenna panels of the terminal can also be specified by the protocol or pre-configured by the network side.

In an optional implementation, the uplink transmission operation includes one of the following:
transmitting an uplink transmission on the first TRP; and
not transmitting an uplink transmission on the first TRP.

The transmitting the uplink transmission on the first TRP may be transmitting the uplink transmission on the first TRP on the overlapping time domain resource, that is, the terminal sends the uplink transmission to the TRP on the overlapping time domain resource.

The not transmitting the uplink transmission on the first TRP may be not transmitting the uplink transmission on the first TRP on the overlapping time domain resource, that is, the terminal does not send the uplink transmission to the TRP on the overlapping time domain resource.

In this implementation, in a case that the overlapping time domain resource is present, the uplink transmission on the first TRP may always be transmitted, or the uplink transmission on the first TRP may never be transmitted, that is, other conditions are not considered. Alternatively, it is determined also based on other conditions whether to transmit the uplink transmission on the first TRP or not to transmit the uplink transmission on the first TRP.

Optionally, in a case that content indicated by the first signaling meets a first condition, the uplink transmission on the first TRP is transmitted; and/or
in a case that the content indicated by the first signaling meets a second condition, the uplink transmission on the first TRP is not transmitted.

The first condition and the second condition are pre-configured conditions or conditions specified by the protocol.

In some implementations, in a case that the first signaling is used to indicate at least one of priority information, a processing indication during resource overlapping, a physical cell identity PCI, and simultaneous uplink transmission on a plurality of antenna panels of the terminal:
the first condition may include at least one of the following:
   the priority information indicates that the first TRP has a highest priority;
   the priority information indicates that a priority of the uplink transmission on the first TRP is higher than a priority of the downlink transmission on the second TRP;
   the priority information indicates that an uplink transmission has a high priority;
   the processing indication during resource overlapping is used to indicate not performing coderate matching/rate-matching on the PDSCH in a case that an overlapping time domain resource is present between the PDSCH transmission on the first TRP and the SSB transmission on the second TRP;
   the first TRP and the second TRP have different PCIs; and
   the priority information indicates that a priority of an SSB list for the first TRP is higher than a priority of an SSB list for the second TRP.

The priority information indicating that the first TRP has the highest priority may be indicating that the first TRP has the highest priority among a plurality of TRPs connected to the terminal.

The priority information indicating that the uplink transmission has a high priority may be the priority information indicating that the uplink transmission has a predefined high priority.

In some implementations, in a case that the first signaling is used to indicate at least one of priority information, a processing indication during resource overlapping, a physical cell identity PCI, and simultaneous uplink transmission on a plurality of antenna panels of the terminal:
the second condition may include at least one of the following:
   the priority information indicates that a priority of the uplink transmission on the first TRP is not higher than a priority of the downlink transmission on the second TRP;
   the priority information indicates that a downlink transmission has a high priority;
   the processing indication during resource overlapping is used to indicate performing coderate matching/rate-matching on the PDSCH in a case that an overlapping time domain resource is present between the PDSCH transmission on the first TRP and the SSB transmission on the second TRP;
   the first TRP and the second TRP have a same PCI;
   the first TRP and the second TRP are located in a same cell but have different PCIs; and
   the priority information indicates that a priority of an SSB list for the first TRP is not higher than a priority of an SSB list for the second TRP.

The priority information indicating that the downlink transmission has a high priority may be the priority information indicating that the downlink transmission has a predefined high priority.

At least one of the following can be implemented through the first condition and the second condition:
in a case that the first TRP and the second TRP are in a same cell but have different PCIs, if the uplink transmission on the first TRP overlaps with the SSB transmission on the second TRP in time domain, the uplink transmission on the first TRP is not performed;
if the first signaling indicates that the transmission of the first TRP has a highest priority, in a case that the uplink transmission on the first TRP overlaps with the downlink transmission on the second TRP, the uplink transmission on the first TRP is always transmitted. Further, in a case that the uplink transmission on the first TRP overlaps with the SSB transmission on the second TRP, the uplink transmission on the first TRP is always transmitted;
if the first signaling indicates that the uplink transmission priority is higher than the SSB transmission, or indicates that the uplink transmission is a higher-priority transmission, in a case that the uplink transmission on the first TRP overlaps with the SSB transmission on the second TRP, the uplink transmission on the first TRP is always transmitted; otherwise, the uplink transmission on the first TRP is not performed;
if the first signaling indicates to perform coderate matching/rate-matching (perform rate-matching) in a case that the PDSCH transmission on the first TRP overlaps with the SSB transmission on the second TRP, the uplink transmission on the first TRP is not performed in a case that the uplink transmission on the first TRP overlaps with the SSB transmission on the second TRP; otherwise, it is determined, based on the priority, whether to perform uplink transmission on the first TRP;
if the second TRP is another TRP with the same PCI as the first TRP in MTRP, in a case that the uplink transmission on the first TRP overlaps with the SSB transmission on the second TRP, the uplink transmission on the first TRP is not performed;
if the second TRP is another TRP with a different PCI from the first TRP in MTRP, in a case that the uplink transmission on the first TRP overlaps with the SSB transmission on the second TRP, the uplink transmission on the first TRP is transmitted;
in a case that the SSB on the second TRP overlaps with the uplink transmission on the first TRP, if a priority defined by an SSB list corresponding to the second TRP is lower than a priority defined by an SSB list corresponding to the first TRP, the uplink transmission on the first TRP is transmitted; and
in a case that the SSB on the second TRP overlaps with the uplink transmission on the first TRP, if a priority defined by an SSB list corresponding to the second TRP is not lower than a priority defined by an SSB list corresponding to the first TRP, the uplink transmission on the first TRP is not transmitted and the SSB overlapping with the uplink transmission is transmitted.

In some implementations, during determining of the uplink transmission operation based on the PCI, the terminal may determine the uplink transmission operation based on the PCI in a case that the terminal has a plurality of antenna panels.

In an optional implementation, the not transmitting an uplink transmission on the first TRP includes at least one of the following:
discarding/cancelling/ignoring the uplink transmission on the first TRP;
receiving a downlink transmission from the second TRP;
in a case that the uplink transmission on the first TRP is repetition transmission (repetition transmission), performing repetition counting in a slot in which the overlapping time domain resource is located, or not performing repetition counting in the slot in which the overlapping time domain resource is located;
in a case that the uplink transmission on the first TRP is a transport block over multiple slots (Transport Block over multiple slots, TBoMS), performing transmission occasion/slot counting in the slot in which the overlapping time domain resource is located, or not performing transmission occasion/slot counting in the slot in which the overlapping time domain resource is located; and
in a case that repetition transmission with counting based on available slots is configured for the terminal, determining the slot in which the overlapping time domain resource is located to be an unavailable slot.

The receiving a downlink transmission from the second TRP may be receiving an SSB transmission on the second TRP.

The performing repetition counting in a slot in which the overlapping time domain resource is located, or not performing repetition counting in the slot in which the overlapping time domain resource is located can be specifically specified by the protocol or pre-configured.

The performing transmission occasion/slot counting in the slot in which the overlapping time domain resource is located, or not performing transmission occasion/slot counting in the slot in which the overlapping time domain resource is located can be specifically specified by the protocol or pre-configured.

The determining the slot in which the overlapping time domain resource is located to be an unavailable slot may be not transmitting the uplink transmission and not performing repetition counting in the unavailable slot.

In an optional implementation, in a case that the first signaling is used to indicate a PCI, whether the slot in which the uplink transmission on the first TRP is located is an available slot is determined according to the SSB transmission on the first TRP, an SSB transmission on a third TRP, an uplink-downlink frame structure configured by using a higher-layer parameter, and time domain resource information corresponding to the uplink transmission on the first TRP; where
the third TRP is at least one TRP having a same PCI as the first TRP in the plurality of TRPs.

The uplink-downlink frame structure configured by using the higher-layer parameter may include one of the following:
tdd-UL-DL-ConfigurationCommon (tdd-UL-DL-ConfigurationCommon); and
tdd-UL-DL-ConfigurationDedicated (tdd-UL-DL-ConfigurationDedicated).

The SSB transmission on the first TRP is determined by the following parameter:
a position of the synchronization signal block in a burst set (ssb-PositionsInBurst) on the first TRP.

The SSB transmission on the third TRP is determined by the following parameter: a position of a synchronization signal block in a burst set (ssb-PositionsInBurst) on the third TRP.

The ssb-PositionsInBurst on the first TRP and the ssb-PositionsInBurst on the third TRP may be a same parameter or different parameters.

The time domain resource information corresponding to the uplink transmission on the first TRP may include at least one of the following:
time domain resource assignment (Time domain resource assignment, TDRA) information corresponding to the uplink transmission on the first TRP; and
time domain resource assignment information in a configured grant (configured grant) corresponding to the uplink transmission on the first TRP.

Resources occupied by the uplink transmission on the first TRP in time domain can be determined by the TDRA or the time domain resource assignment information in the configured grant.

If the uplink transmission on the first TRP does not overlap with the SSB transmission on the first TRP, the SSB transmission on the third TRP, and the downlink slot determined by the uplink-downlink frame structure configured by using the higher-layer parameter or the special slot (special slot) used for downlink transmission in time domain, the slot in which the uplink transmission on the first TRP is located is determined to be an available slot; otherwise, it is determined to be an unavailable slot.

In this implementation, whether the slot in which the uplink transmission on the first TRP is located is an available slot is determined based on the SSB transmission on the first TRP, the SSB transmission on the third TRP, the uplink-downlink frame structures configured by the higher-layer parameter, and time domain resource information corresponding to the uplink transmission on the first TRP, and therefore the number of repetitions is determined based on available slots or unavailable slots.

In an optional implementation, the downlink transmission includes SSB transmission.

In some implementations, the downlink transmission may alternatively be a downlink transmission other than SSB, such as PDCCH or physical downlink control channel (Physical downlink control channel, PDCCH).

In an optional implementation, the uplink transmission includes at least one of the following:
PUSCH repetition transmission;
TBoMS uplink transmission;
TBoMS-based PUSCH repetition transmission; and
PUCCH repetition transmission.

The transmission related to PUSCH may be configured by configured grant (configured grant, CG) or dynamic grant (dynamic grant, DG).

The PUSCH repetition transmission may include at least one of the following:
first-type PUSCH repetition transmission, second-type PUSCH repetition transmission, PUSCH repetition transmission for message 3 (Message 3, Msg3), and PUSCH repetition transmission based on random access response (Random Access Response, RAR) scheduling in contention-free random access (Contention Free Random Access, CFRA) (repetition of PUSCH scheduled by RAR in CFRA); where the first-type PUSCH repetition transmission is PUSCH repetition transmission for repetition counting based on consecutive slots, and the second-type PUSCH repetition transmission is PUSCH repetition transmission for repetition counting based on available slots.

The first-type PUSCH repetition transmission may include at least one of PUSCH repetition transmission type A (PUSCH repetition type A) and PUSCH repetition transmission type B (PUSCH repetition type B) defined by the protocol. The second-type PUSCH repetition transmission may include at least one of PUSCH repetition transmission type A (PUSCH repetition type A) and PUSCH repetition transmission type B (PUSCH repetition type B) defined by the protocol.

As an optional implementation, the method further includes:
reporting, by the terminal, capability information, where the capability information is used to indicate at least one of the following:
whether the terminal supports counting based on available slots; and whether the terminal has a capability of simultaneous transmission on a plurality of panels.

In this implementation, based on the capability information, the network-side device may configure the corresponding first signaling for the terminal, so that the uplink transmission operation of the terminal indicated by the first signaling matches the terminal capability, further improving transmission performance of the terminal.

In this embodiment of this application, the terminal receives the first signaling, where the first signaling is used for determining an uplink transmission operation of the terminal on the first transmission and reception point TRP; and the terminal determines an uplink transmission operation of the terminal on the first TRP according to the first signaling in a case that an overlapping time domain resource is present between the uplink transmission of the terminal on the first TRP and the downlink transmission of the terminal on the second TRP. The terminal is connected to a plurality of TRPs, and the plurality of TRPs include the first TRP and the second TRP. In this way, in a case that an overlapping time domain resource is present between the uplink transmission of the terminal on the first TRP and the downlink transmission of the terminal on the second TRP, the uplink transmission operation of the terminal on the first TRP can be determined according to the first signaling, so as to resolve the conflict problem of overlapping time domain resources of the terminal between the first TRP and the second TRP, further improving transmission performance of the terminal.

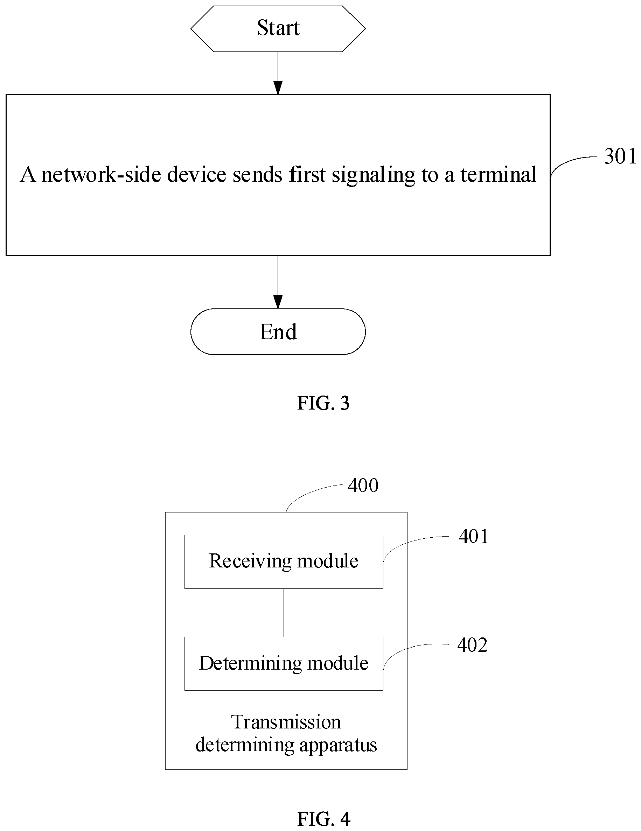

Referring to FIG. 3, FIG. 3 is a flowchart of a transmission determining method according to an embodiment of this application. As shown in FIG. 3, the method includes the following steps.

Step 301: A network-side device sends first signaling to a terminal, where the first signaling is used for determining an uplink transmission operation of the terminal on a first TRP in a case that an overlapping time domain resource is present between an uplink transmission of the terminal on the first TRP and a downlink transmission of the terminal on a second TRP.

Optionally, the first signaling is used to indicate at least one of the following:
priority information, a processing indication during resource overlapping, a physical cell identity PCI, and simultaneous uplink transmission on a plurality of antenna panels of the terminal.

Optionally, the priority information includes at least one of the following:
priorities between a plurality of TRPs;
priority of uplink transmission;
priorities between uplink transmission and downlink transmission; and
priorities between a plurality of synchronization signal block SSB lists, where the plurality of SSB lists correspond to a plurality of different PCIs respectively, and any one SSB list corresponds to one TRP/TRP group.

Optionally, the processing indication during resource overlapping is used to indicate:
whether to perform coderate matching/rate-matching on the PDSCH in a case that an overlapping time domain resource is present between a physical downlink shared channel PDSCH transmission on the first TRP and an SSB transmission on the second TRP.

Optionally, the first signaling is used to indicate a PCI through at least one of the following:
a transmission configuration indicator TCI state or TCI state list;
a correspondence between TCI states and PCIs; and
a correspondence between TCI state lists and PCIs.

Optionally, the TCI state corresponds to a PCI of the first TRP, or the TCI state corresponds to a PCI of at least one TRP in the plurality of TRPs other than the first TRP; and/or
the TCI state list includes at least one TCI state, and each TCI state corresponds to a PCI of at least one TRP.

Optionally, the uplink transmission operation includes one of the following:
transmitting an uplink transmission on the first TRP; and
not transmitting an uplink transmission on the first TRP.

Optionally, the not transmitting an uplink transmission on the first TRP includes at least one of the following:
discarding/cancelling/ignoring the uplink transmission on the first TRP;
receiving a downlink transmission from the second TRP;
in a case that the uplink transmission on the first TRP is repetition transmission, performing repetition counting in a slot in which the overlapping time domain resource is located, or not performing repetition counting in the slot in which the overlapping time domain resource is located;
in a case that the uplink transmission on the first TRP is a transport block over multiple slots TBoMS, performing transmission occasion/slot counting in the slot in which the overlapping time domain resource is located, or not performing transmission occasion/slot counting in the slot in which the overlapping time domain resource is located; and
in a case that repetition transmission with counting based on available slots is configured for the terminal, determining the slot in which the overlapping time domain resource is located to be an unavailable slot.

Optionally, in a case that the first signaling is used to indicate a PCI, whether the slot in which the uplink transmission on the first TRP is located is an available slot is determined according to the SSB transmission on the first TRP, an SSB transmission for a third TRP, an uplink and downlink frame structure configured by using a higher-layer parameter, and time domain resource information corresponding to the uplink transmission on the first TRP; where
the third TRP is at least one TRP having a same PCI as the first TRP in the plurality of TRPs.

Optionally, the downlink transmission includes SSB transmission.

Optionally, the uplink transmission includes at least one of the following:
physical uplink shared channel PUSCH repetition transmission;
TBoMS uplink transmission;
TBoMS-based PUSCH repetition transmission; and
physical uplink control channel PUCCH repetition transmission.

Optionally, the PUSCH repetition transmission may include at least one of the following:
first-type PUSCH repetition transmission, second-type PUSCH repetition transmission, PUSCH repetition transmission for message 3 (Msg3), and PUSCH repetition transmission based on random access response RAR scheduling in contention-free random access CFRA; where the first-type PUSCH repetition transmission is PUSCH repetition transmission for repetition counting based on consecutive slots, and the second-type PUSCH repetition transmission is PUSCH repetition transmission for repetition counting based on available slots.

Optionally, the method further includes:
receiving, by the network-side device, capability information reported by the terminal, where the capability information is used to indicate at least one of the following:
whether the terminal supports counting based on available slots; and
whether the terminal has a capability of simultaneous transmission on a plurality of panels.

It should be noted that this embodiment is an implementation of a network-side device corresponding to the embodiment shown in FIG. 2. For the specific implementation, reference may be made to the related description of the embodiment shown in FIG. 2. To avoid repeated descriptions, details are not repeated in this embodiment.

The method provided in this embodiment of this application is illustrated by using the downlink transmission being SSB transmission and the uplink transmission being PUSCH transmission as examples.

### Embodiment 1:

Assuming that a priority of SSB transmission configured by default by the network is higher than a priority of PUSCH transmission, if the terminal is scheduled for PUSCH repetition type A transmission on TRP#1 at that time, the number of repetitions is 8; if a transmission occasion of the third repetition transmission overlaps with a transmission occasion of SSB transmission on TRP#2, the terminal does not transmit PUSCH repetition type A transmission on TRP#1, and receives SSB transmission on TRP#2 at the transmission occasion.

Further, the terminal does not transmit PUSCH repetition type A transmission on TRP#1, but a slot in which the transmission occasion is located needs to be included in the number of repetitions for repetition type A; or
further, if the network configures/enables a manner of counting based on available slots for the terminal for PUSCH repetition type A transmission, the transmission occasion is considered as an unavailable slot and is not counted as the number of repetitions; or
further, if the network configures/enables a manner of counting based on available slots for the terminal for PUSCH repetition type A transmission, the transmission occasion is considered as an unavailable slot and is counted as the number of repetitions; however, the third repetition transmission is not actually performed.

### Embodiment 2

Assuming that the network configures priorities between a plurality of TRPs through RRC: TRP#1>TRP#2>TRP#4>TRP#3. If the terminal is scheduled for PUSCH repetition type A transmission on TRP#1 at that time, the number of repetitions is 8. If a transmission occasion of the third repetition transmission overlaps with an SSB transmission occasion on TRP#2, the terminal transmits PUSCH repetition type A transmission on TRP#1 according to a priority order between the TRPs.

### Embodiment 3:

Assuming that the network configures priorities between a plurality of TRPs through RRC: TRP#1>TRP#2>TRP#4>TRP#3, the network also configures priorities between uplink transmission and SSB transmission through a system message: SSB>PUSCH.

if the terminal is scheduled for PUSCH repetition type A transmission on TRP#1 at that time, the number of repetitions is 8; and if a transmission occasion of the third repetition transmission overlaps with an SSB transmission occasion on TRP#2, the transmission operation of the terminal is as follows:
according to TRP priorities, the terminal transmits the PUSCH repetition type A transmission on TRP#1; or
according to channel/signal priorities, the terminal does not transmit the PUSCH repetition type A transmission on TRP#1, but receives SSB transmission on TRP#2 at this transmission occasion; or
if TRP#1 and TRP#2 have a same PCI, according to channel/signal priorities, the terminal does not transmit the PUSCH repetition type A transmission on the TRP#1, but receives SSB transmission on the TRP#2 at this transmission occasion; or
if TRP#1 and TRP#2 have a same PCI, according to TRP priorities, the terminal transmits PUSCH repetition type A transmission on the TRP#1; or
if TRP#1 and TRP#2 have different PCIs, according to TRP priorities, the terminal transmits PUSCH repetition type A transmission on the TRP#1; or
if TRP#1 and TRP#2 have different PCIs, according to channel/signal priorities, the terminal does not transmit the PUSCH repetition type A transmission on TRP#1, but receives SSB transmission on TRP#2 at this transmission occasion.

### Embodiment 4:

Assuming that the network indicates, by using a TCI state in DCI, that a PCI corresponding to TRP#1 is 5, if the terminal can obtain a mapping/correspondence between TRPs and PCIs in MTRP from RRC configuration and determine that a PCI corresponding to TRP#2 is also 5, the terminal can learn that TRP#1 and TRP#2 have a same PCI.

If the UE is scheduled for PUSCH repetition type A transmission on TRP#1 at that time, the number of repetitions is 8; and if a transmission occasion of the third repetition transmission overlaps with the SSB transmission occasion on TRP#2,
the UE does not transmit PUSCH repetition type A transmission on TRP#1, but receives SSB transmission on TRP#2 at this transmission occasion.

Further, if the network configures/enables a manner of counting based on available slots for the UE for PUSCH repetition type A transmission, the transmission occasion is considered as an unavailable slot and is not counted as the number of repetitions.

### Embodiment 5:

Assuming that the network indicates through a TCI state list in DCI that a PCI corresponding to TRP#1 is 5 and a PCI corresponding to TRP#2 is 8, the terminal can know that TRP#1 and TRP#2 have different PCIs. In addition, the network configured that a priority of SSB transmission is higher than a priority of PUSCH transmission.

If the UE is scheduled for PUSCH repetition type A transmission on TRP#1 at that time, and the number of repetitions is 8, and if a transmission occasion of the third repetition transmission overlaps with an SSB transmission occasion on TRP#2, the terminal does not transmit PUSCH repetition type A transmission on TRP#1, but receives SSB transmission on TRP#2 at this transmission occasion; or
further, if the network configures/enables a manner of counting based on available slots for the terminal for PUSCH repetition type A transmission, the transmission occasion is considered as an unavailable slot and is counted as the number of repetitions; however, the third repetition transmission is not actually performed.

In the transmission determining method provided in the embodiments of this application, the execution subject may be a transmission determining apparatus. In the embodiments of this application, the transmission determining method being performed by the transmission determining apparatus is used as an example to describe the transmission determining method provided in the embodiments of this application.

Referring to FIG. 4, FIG. 4 is a structural diagram of a transmission determining apparatus according to an embodiment of this application. As shown in FIG. 4, the transmission determining apparatus 400 includes:
a receiving module 401, configured to receive first signaling, where the first signaling is used for determining an uplink transmission operation of a terminal on a first transmission and reception point TRP; and
a determining module 402, configured to determine an uplink transmission operation of the terminal on the first TRP according to the first signaling in a case that an overlapping time domain resource is present between an uplink transmission of the terminal on the first TRP and a downlink transmission of the terminal on a second TRP; where
the terminal is connected to a plurality of TRPs, and the plurality of TRPs include the first TRP and the second TRP.

Optionally, the first signaling is used to indicate at least one of the following:
priority information, a processing indication during resource overlapping, a physical cell identity PCI, and simultaneous uplink transmission on a plurality of antenna panels of the terminal.

Optionally, the priority information includes at least one of the following:
priorities between a plurality of TRPs;
priority of uplink transmission;
priorities between uplink transmission and downlink transmission; and
priorities between a plurality of synchronization signal block SSB lists, where the plurality of SSB lists correspond to a plurality of different PCIs respectively, and any one SSB list corresponds to one TRP/TRP group.

Optionally, the processing indication during resource overlapping is used to indicate:
whether to perform coderate matching/rate-matching on the PDSCH in a case that an overlapping time domain resource is present between a physical downlink shared channel PDSCH transmission on the first TRP and an SSB transmission on the second TRP.

Optionally, the first signaling is used to indicate a PCI through at least one of the following:
a transmission configuration indicator TCI state or TCI state list;
a correspondence between TCI states and PCIs; and
a correspondence between TCI state lists and PCIs.

Optionally, the TCI state corresponds to a PCI of the first TRP, or the TCI state corresponds to a PCI of at least one TRP in the plurality of TRPs other than the first TRP; and/or
the TCI state list includes at least one TCI state, and each TCI state corresponds to a PCI of at least one TRP.

Optionally, the uplink transmission operation includes one of the following:
transmitting an uplink transmission on the first TRP; and
not transmitting an uplink transmission on the first TRP.

Optionally, in a case that content indicated by the first signaling meets a first condition, the uplink transmission on the first TRP is transmitted; and/or
in a case that the content indicated by the first signaling meets a second condition, the uplink transmission on the first TRP is not transmitted.

Optionally, in a case that the first signaling is used to indicate at least one of priority information, a processing indication during resource overlapping, a physical cell identity PCI, and simultaneous uplink transmission on a plurality of antenna panels of the terminal:
the first condition includes at least one of the following:
the priority information indicates that the first TRP has a highest priority;
the priority information indicates that a priority of the uplink transmission on the first TRP is higher than a priority of the downlink transmission on the second TRP;
the priority information indicates that an uplink transmission has a high priority;
the processing indication during resource overlapping is used to indicate not performing coderate matching/rate-matching on the PDSCH in a case that an overlapping time domain resource is present between the PDSCH transmission on the first TRP and the SSB transmission on the second TRP;
the first TRP and the second TRP have different PCIs; and
the priority information indicates that a priority of an SSB list for the first TRP is higher than a priority of an SSB list for the second TRP.

Optionally, in a case that the first signaling is used to indicate at least one of priority information, a processing indication during resource overlapping, a physical cell identity PCI, and simultaneous uplink transmission on a plurality of antenna panels of the terminal:
the second condition includes at least one of the following:
the priority information indicates that a priority of the uplink transmission on the first TRP is not higher than a priority of the downlink transmission on the second TRP;
the priority information indicates that a downlink transmission has a high priority;
the processing indication during resource overlapping is used to indicate performing coderate matching/rate-matching on the PDSCH in a case that an overlapping time domain resource is present between the PDSCH transmission on the first TRP and the SSB transmission on the second TRP;
the first TRP and the second TRP have a same PCI;
the first TRP and the second TRP are located in a same cell but have different PCIs; and
the priority information indicates that a priority of an SSB list for the first TRP is not higher than a priority of an SSB list for the second TRP.

Optionally, the not transmitting an uplink transmission on the first TRP includes at least one of the following:
discarding/cancelling/ignoring the uplink transmission on the first TRP;
receiving a downlink transmission from the second TRP;
in a case that the uplink transmission on the first TRP is repetition transmission, performing repetition counting in a slot in which the overlapping time domain resource is located, or not performing repetition counting in the slot in which the overlapping time domain resource is located;
in a case that the uplink transmission on the first TRP is a transport block over multiple slots TBoMS, performing transmission occasion/slot counting in the slot in which the overlapping time domain resource is located, or not performing transmission occasion/slot counting in the slot in which the overlapping time domain resource is located; and
in a case that repetition transmission with counting based on available slots is configured for the terminal, determining the slot in which the overlapping time domain resource is located to be an unavailable slot.

Optionally, in a case that the first signaling is used to indicate a PCI, whether the slot in which the uplink transmission on the first TRP is located is an available slot is determined according to the SSB transmission on the first TRP, an SSB transmission on a third TRP, an uplink-downlink frame structure configured by using a higher-layer parameter, and time domain resource information corresponding to the uplink transmission on the first TRP; where
the third TRP is at least one TRP having a same PCI as the first TRP in the plurality of TRPs.

Optionally, the downlink transmission includes SSB transmission.

Optionally, the uplink transmission includes at least one of the following:
physical uplink shared channel PUSCH repetition transmission;
TBoMS uplink transmission;
TBoMS-based PUSCH repetition transmission; and
physical uplink control channel PUCCH repetition transmission.

Optionally, the PUSCH repetition transmission includes at least one of the following:
first-type PUSCH repetition transmission, second-type PUSCH repetition transmission, PUSCH repetition transmission for message 3 (Msg3), and PUSCH repetition transmission based on random access response RAR scheduling in contention-free random access CFRA; where the first-type PUSCH repetition transmission is PUSCH repetition transmission for repetition counting based on consecutive slots, and the second-type PUSCH repetition transmission is PUSCH repetition transmission for repetition counting based on available slots.

Optionally, the apparatus further includes:
a reporting module, configured to report capability information, where the capability information is used to indicate at least one of the following:
whether the terminal supports counting based on available slots; and
whether the terminal has a capability of simultaneous transmission on a plurality of panels.

The transmission determining apparatus can improve transmission performance of the terminal.

The transmission determining apparatus in this embodiment of the application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal listed in the embodiment of this application, and other devices may be a server, a network attached storage (Network Attached Storage, NAS), and the like. This is not limited in the embodiment of this application.

The transmission determining apparatus provided in this embodiment of this application is capable of implementing the processes implemented in the method embodiments shown in FIG. 2, with the same technical effects achieved. To avoid repetition, details are not described herein again.

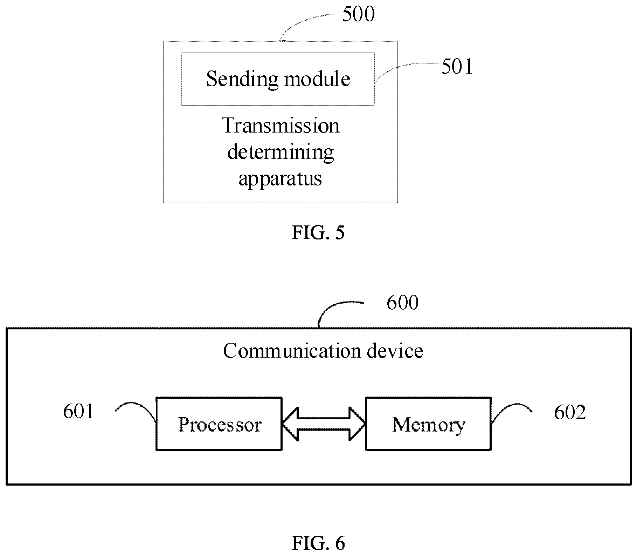

Referring to FIG. 5, FIG. 5 is a structural diagram of another transmission determining apparatus according to an embodiment of this application. As shown in FIG. 5, the transmission determining apparatus 500 includes:
a sending module 501, configured to send first signaling to a terminal, where the first signaling is used for determining an uplink transmission operation of the terminal on a first TRP in a case that an overlapping time domain resource is present between an uplink transmission of the terminal on the first TRP and a downlink transmission of the terminal on a second TRP.

Optionally, the first signaling is used to indicate at least one of the following:
priority information, a processing indication during resource overlapping, a physical cell identity PCI, and simultaneous uplink transmission on a plurality of antenna panels of the terminal.

Optionally, the priority information includes at least one of the following:
priorities between a plurality of TRPs;
priority of uplink transmission;
priorities between uplink transmission and downlink transmission; and
priorities between a plurality of synchronization signal block SSB lists, where the plurality of SSB lists correspond to a plurality of different PCIs respectively, and any one SSB list corresponds to one TRP/TRP group.

Optionally, the processing indication during resource overlapping is used to indicate:
whether to perform coderate matching/rate-matching on the PDSCH in a case that an overlapping time domain resource is present between a physical downlink shared channel PDSCH transmission on the first TRP and an SSB transmission on the second TRP.

Optionally, the first signaling is used to indicate a PCI through at least one of the following:
a transmission configuration indicator TCI state or TCI state list;
a correspondence between TCI states and PCIs; and
a correspondence between TCI state lists and PCIs.

Optionally, the TCI state corresponds to a PCI of the first TRP, or the TCI state corresponds to a PCI of at least one TRP in the plurality of TRPs other than the first TRP; and/or
the TCI state list includes at least one TCI state, and each TCI state corresponds to a PCI of at least one TRP.

Optionally, the uplink transmission operation includes one of the following:
transmitting an uplink transmission on the first TRP; and
not transmitting an uplink transmission on the first TRP.

Optionally, the not transmitting an uplink transmission on the first TRP includes at least one of the following:
discarding/cancelling/ignoring the uplink transmission on the first TRP;
receiving a downlink transmission from the second TRP;
in a case that the uplink transmission on the first TRP is repetition transmission, performing repetition counting in a slot in which the overlapping time domain resource is located, or not performing repetition counting in the slot in which the overlapping time domain resource is located;
in a case that the uplink transmission on the first TRP is a transport block over multiple slots TBoMS, performing transmission occasion/slot counting in the slot in which the overlapping time domain resource is located, or not performing transmission occasion/slot counting in the slot in which the overlapping time domain resource is located; and
in a case that repetition transmission with counting based on available slots is configured for the terminal, determining the slot in which the overlapping time domain resource is located to be an unavailable slot.

Optionally, in a case that the first signaling is used to indicate a PCI, whether the slot in which the uplink transmission on the first TRP is located is an available slot is determined according to the SSB transmission on the first TRP, an SSB transmission on a third TRP, an uplink-downlink frame structure configured by using a higher-layer parameter, and time domain resource information corresponding to the uplink transmission on the first TRP; where
the third TRP is at least one TRP having a same PCI as the first TRP in the plurality of TRPs.

Optionally, the downlink transmission includes SSB transmission.

Optionally, the uplink transmission includes at least one of the following:
physical uplink shared channel PUSCH repetition transmission;
TBoMS uplink transmission;
TBoMS-based PUSCH repetition transmission; and
physical uplink control channel PUCCH repetition transmission.

Optionally, the PUSCH repetition transmission includes at least one of the following:
first-type PUSCH repetition transmission, second-type PUSCH repetition transmission, PUSCH repetition transmission for message 3 (Msg3), and PUSCH repetition transmission based on random access response RAR scheduling in contention-free random access CFRA; where the first-type PUSCH repetition transmission is PUSCH repetition transmission for repetition counting based on consecutive slots, and the second-type PUSCH repetition transmission is PUSCH repetition transmission for repetition counting based on available slots.

Optionally, the apparatus further includes:
a receiving module, configured to receive capability information reported by the terminal, where the capability information is used to indicate at least one of the following:
whether the terminal supports counting based on available slots; and
whether the terminal has a capability of simultaneous transmission on a plurality of panels.

The transmission determining apparatus can improve transmission performance of the terminal.

The transmission determining apparatus in this embodiment of the application may be an electronic device, such as an electronic device with an operating system, or a component in the electronic device, such as an integrated circuit or a chip. The electronic device may be a network-side device or other devices than the terminal. For example, the network-side device may include, but is not limited to, the types of the network-side device listed above, and other devices may be a server, a network attached storage (Network Attached Storage, NAS), and the like. This is not specifically limited in the embodiments of this application.

The transmission determining apparatus provided in this embodiment of this application is capable of implementing the processes implemented in the method embodiments shown in FIG. 3, with the same technical effects achieved. To avoid repetition, details are not described herein again.

Optionally, as shown in FIG. 6, an embodiment of this application further provides a communication device 600, including a processor 601, a memory 602, and a program or instructions stored in the memory 602 and capable of running on the processor 601. For example, when the communication device 600 is a terminal and when the program or the instructions are executed by the processor 601, the steps of the foregoing embodiments of the transmission determining method on the terminal side are implemented, with the same technical effects achieved. When the communication device 600 is a network-side device and when the program or the instructions are executed by the processor 601, the processes of the foregoing embodiment of the transmission determining method on the network-side device side are implemented, with the same technical effects achieved. To avoid repetition, details are not described herein again.

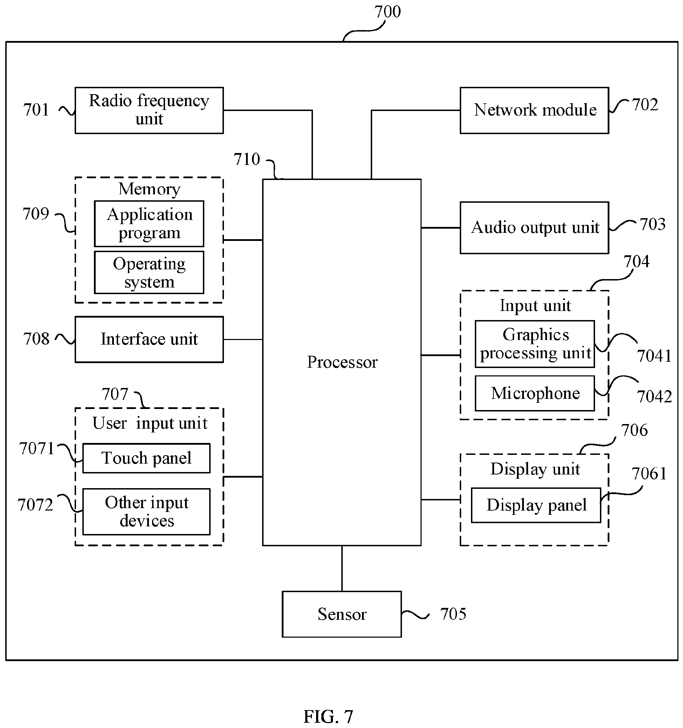

An embodiment of this application further provides a terminal, including a processor and a communication interface. The communication interface is configured to receive first signaling for the terminal, where the first signaling is used for determining an uplink transmission operation of the terminal on a first transmission and reception point TRP. The processor or the communication interface is configured to, for the terminal, determine an uplink transmission operation of the terminal on the first TRP according to the first signaling in a case that an overlapping time domain resource is present between an uplink transmission of the terminal on the first TRP and a downlink transmission of the terminal on a second TRP; where the terminal is connected to a plurality of TRPs, and the plurality of TRPs include the first TRP and the second TRP. The terminal embodiments correspond to the foregoing terminal-side method embodiments, and the implementation processes and implementations of the foregoing method embodiments can be applied to the terminal embodiments, with the same technical effects achieved. Specifically, FIG. 7 is a schematic diagram of a hardware structure of a terminal for implementing the embodiments of this application.

The terminal 700 includes but is not limited to at least part of components such as a radio frequency unit 701, a network module 702, an audio output unit 703, an input unit 704, a sensor 705, a display unit 706, a user input unit 707, an interface unit 708, a memory 709, and a processor 710.

Persons skilled in the art can understand that the terminal 700 may further include a power supply (for example, a battery) supplying power to the components, and the power supply may be logically connected to the processor 710 through a power management system. In this way, functions such as charge management, discharge management, and power consumption management are implemented by using the power management system. The structure of the terminal shown in FIG. 7 does not constitute any limitation on the terminal. The terminal may include more or fewer components than shown in the figure, or a combination of some components, or the components disposed differently. Details are not described herein again.

It can be understood that in this embodiment of this application, the input unit 704 may include a graphics processing unit (Graphics Processing Unit, GPU) 7041 and a microphone 7042. The graphics processing unit 7041 processes image data of a still picture or video obtained by an image capture apparatus (such as a camera) in a video capture mode or an image capture mode. The display unit 706 may include a display panel 7061, and the display panel 7061 may be configured in a form of a liquid crystal display, an organic light-emitting diode, and the like. The user input unit 707 may include at least one of a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function key (such as a volume control key or a power on/off key), a trackball, a mouse, a joystick, and the like. Details are not described herein.

In this embodiment of this application, the radio frequency unit 701 receives downlink data from a network-side device, and then sends the downlink data to the processor 710 for processing. In addition, the radio frequency unit 701 may send uplink data to the network-side device. Generally, the radio frequency unit 701 includes but is not limited to an antenna, an amplifier, a transceiver, a coupler, a low noise amplifier, a duplexer, and the like.

The memory 709 may be configured to store software programs or instructions and various data. The memory 709 may include a first storage area for storing a program or instructions and a second storage area for storing data. The first storage area may store an operating system, an application program or instruction required by at least one function (for example, a sound playback function or an image playback function), and the like. In addition, the memory 709 may include a volatile memory or a non-volatile memory, or the memory 709 may include both a volatile memory and a non-volatile memory. The non-volatile memory may be a read-only memory (Read-Only Memory, ROM), a programmable read only memory (Programmable ROM, PROM), an erasable programmable read-only memory (Erasable PROM, EPROM), and an electrically erasable programmable read-only memory (Electrically EPROM, EEPROM), or flash memory. The volatile memory can be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 709 in the embodiments of this application includes but is not limited to these and any other suitable types of memories.

The processor 710 may include one or more processing units. Optionally, an application processor and a modem processor may be integrated in the processor 710. The application processor primarily processes operations involving an operating system, user interfaces, application programs, and the like. The modem processor primarily processes radio communication signals, for example, being a baseband processor. It can be understood that the modem processor may alternatively be not integrated in the processor 710.

The radio frequency unit 701 is configured to receive first signaling, where the first signaling is used for determining an uplink transmission operation of a terminal on a first transmission and reception point TRP; and
the processor 710 is configured to determine an uplink transmission operation of the terminal on the first TRP according to the first signaling in a case that an overlapping time domain resource is present between an uplink transmission of the terminal on the first TRP and a downlink transmission of the terminal on a second TRP; where
the terminal is connected to a plurality of TRPs, and the plurality of TRPs include the first TRP and the second TRP.

Optionally, the first signaling is used to indicate at least one of the following:
priority information, a processing indication during resource overlapping, a physical cell identity PCI, and simultaneous uplink transmission on a plurality of antenna panels of the terminal.

Optionally, the priority information includes at least one of the following:
priorities between a plurality of TRPs;
priority of uplink transmission;
priorities between uplink transmission and downlink transmission; and
priorities between a plurality of synchronization signal block SSB lists, where the plurality of SSB lists correspond to a plurality of different PCIs respectively, and any one SSB list corresponds to one TRP/TRP group.

Optionally, the processing indication during resource overlapping is used to indicate:
whether to perform coderate matching/rate-matching on the PDSCH in a case that an overlapping time domain resource is present between a physical downlink shared channel PDSCH transmission on the first TRP and an SSB transmission on the second TRP.

Optionally, the first signaling is used to indicate a PCI through at least one of the following:
a transmission configuration indicator TCI state or TCI state list;
a correspondence between TCI states and PCIs; and
a correspondence between TCI state lists and PCIs.

Optionally, the TCI state corresponds to a PCI of the first TRP, or the TCI state corresponds to a PCI of at least one TRP in the plurality of TRPs other than the first TRP; and/or
the TCI state list includes at least one TCI state, and each TCI state corresponds to a PCI of at least one TRP.

Optionally, the uplink transmission operation includes one of the following:
transmitting an uplink transmission on the first TRP; and
not transmitting an uplink transmission on the first TRP.

Optionally, in a case that content indicated by the first signaling meets a first condition, the uplink transmission on the first TRP is transmitted; and/or
in a case that the content indicated by the first signaling meets a second condition, the uplink transmission on the first TRP is not transmitted.

Optionally, in a case that the first signaling is used to indicate at least one of priority information, a processing indication during resource overlapping, a physical cell identity PCI, and simultaneous uplink transmission on a plurality of antenna panels of the terminal:
the first condition includes at least one of the following:
the priority information indicates that the first TRP has a highest priority;
the priority information indicates that a priority of the uplink transmission on the first TRP is higher than a priority of the downlink transmission on the second TRP;
the priority information indicates that an uplink transmission has a high priority;
the processing indication during resource overlapping is used to indicate not performing coderate matching/rate-matching on the PDSCH in a case that an overlapping time domain resource is present between the PDSCH transmission on the first TRP and the SSB transmission on the second TRP;
the first TRP and the second TRP have different PCIs; and
the priority information indicates that a priority of an SSB list for the first TRP is higher than a priority of an SSB list for the second TRP.

Optionally, in a case that the first signaling is used to indicate at least one of priority information, a processing indication during resource overlapping, a physical cell identity PCI, and simultaneous uplink transmission on a plurality of antenna panels of the terminal:
the second condition includes at least one of the following:
the priority information indicates that a priority of the uplink transmission on the first TRP is not higher than a priority of the downlink transmission on the second TRP;
the priority information indicates that a downlink transmission has a high priority;
the processing indication during resource overlapping is used to indicate performing coderate matching/rate-matching on the PDSCH in a case that an overlapping time domain resource is present between the PDSCH transmission on the first TRP and the SSB transmission on the second TRP;
the first TRP and the second TRP have a same PCI;
the first TRP and the second TRP are located in a same cell but have different PCIs; and
the priority information indicates that a priority of an SSB list for the first TRP is not higher than a priority of an SSB list for the second TRP.

Optionally, the not transmitting an uplink transmission on the first TRP includes at least one of the following:
discarding/cancelling/ignoring the uplink transmission on the first TRP;
receiving a downlink transmission from the second TRP;
in a case that the uplink transmission on the first TRP is repetition transmission, performing repetition counting in a slot in which the overlapping time domain resource is located, or not performing repetition counting in the slot in which the overlapping time domain resource is located;
in a case that the uplink transmission on the first TRP is a transport block over multiple slots TBoMS, performing transmission occasion/slot counting in the slot in which the overlapping time domain resource is located, or not performing transmission occasion/slot counting in the slot in which the overlapping time domain resource is located; and
in a case that repetition transmission with counting based on available slots is configured for the terminal, determining the slot in which the overlapping time domain resource is located to be an unavailable slot.

Optionally, in a case that the first signaling is used to indicate a PCI, whether the slot in which the uplink transmission on the first TRP is located is an available slot is determined according to the SSB transmission on the first TRP, an SSB transmission on a third TRP, an uplink-downlink frame structure configured by using a higher-layer parameter, and time domain resource information corresponding to the uplink transmission on the first TRP; where
the third TRP is at least one TRP having a same PCI as the first TRP in the plurality of TRPs.

Optionally, the downlink transmission includes SSB transmission.

Optionally, the uplink transmission includes at least one of the following:
physical uplink shared channel PUSCH repetition transmission;
TBoMS uplink transmission;
TBoMS-based PUSCH repetition transmission; and
physical uplink control channel PUCCH repetition transmission.

Optionally, the PUSCH repetition transmission includes at least one of the following:
first-type PUSCH repetition transmission, second-type PUSCH repetition transmission, PUSCH repetition transmission for message 3 (Msg3), and PUSCH repetition transmission based on random access response RAR scheduling in contention-free random access CFRA; where the first-type PUSCH repetition transmission is PUSCH repetition transmission for repetition counting based on consecutive slots, and the second-type PUSCH repetition transmission is PUSCH repetition transmission for repetition counting based on available slots.

Optionally, the radio frequency unit 701 is further configured to:
report capability information, where the capability information is used to indicate at least one of the following:
whether the terminal supports counting based on available slots; and
whether the terminal has a capability of simultaneous transmission on a plurality of panels.

The terminal can improve transmission performance of the terminal.

An embodiment of this application further provides a network-side device, including a processor and a communication interface. The communication interface sends first signaling to a terminal, where the first signaling is used for determining an uplink transmission operation of the terminal on a first TRP in a case that an overlapping time domain resource is present between an uplink transmission of the terminal on the first TRP and a downlink transmission of the terminal on a second TRP. The network-side device embodiments correspond to the foregoing network-side device method embodiments, and the implementation processes and implementations of the foregoing method embodiments can be applied to the network-side device embodiments, with the same technical effects achieved.

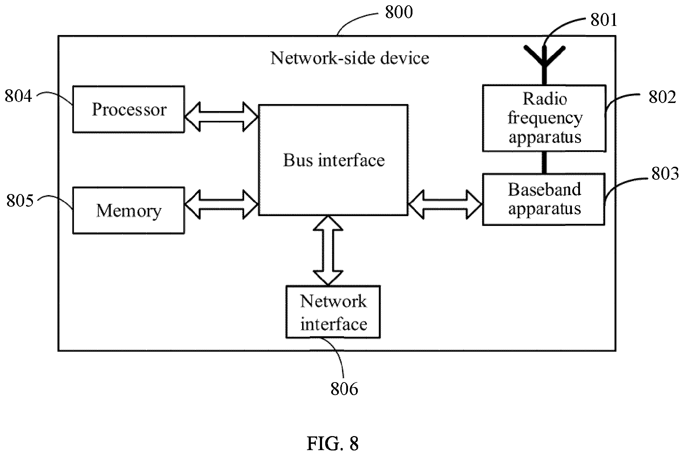

Specifically, an embodiment of this application further provides a network-side device. As shown in FIG. 8, the network-side device 800 includes an antenna 801, a radio frequency apparatus 802, a baseband apparatus 803, a processor 804, and a memory 805. The antenna 801 is connected to the radio frequency apparatus 802. In an uplink direction, the radio frequency apparatus 802 receives information by using the antenna 801, and sends the received information to the baseband apparatus 803 for processing. In a downlink direction, the baseband apparatus 803 processes to-be-sent information, and sends the information to the radio frequency apparatus 802; and the radio frequency apparatus 802 processes the received information and then sends the information out by using the antenna 801.

The method executed by the network-side device in the foregoing embodiments can be implemented in the baseband apparatus 803, and the baseband apparatus 803 includes a baseband processor.

The baseband apparatus 803 may include, for example, at least one baseband board, where a plurality of chips are disposed on the baseband board. As shown in FIG. 8, one of the chips is, for example, a baseband processor, and is connected to the memory 805 through the bus interface, to invoke a program in the memory 805 to perform the operations of the network device shown in the foregoing method embodiments.

The network-side device may further include a network interface 806, where the interface is, for example, a common public radio interface (common public radio interface, CPRI).

Specifically, the network-side device 800 in this embodiment of the present invention further includes: instructions or a program stored in the memory 805 and capable of running on the processor 804. The processor 804 invokes the instructions or program in the memory 805 to execute the method executed by the modules shown in FIG. 5, with the same technical effects achieved. To avoid repetition, details are not repeated herein.

The radio frequency apparatus 802 is configured to send first signaling to a terminal, where the first signaling is used for determining an uplink transmission operation of the terminal on a first TRP in a case that an overlapping time domain resource is present between an uplink transmission of the terminal on the first TRP and a downlink transmission of the terminal on a second TRP.

Optionally, the first signaling is used to indicate at least one of the following:
priority information, a processing indication during resource overlapping, a physical cell identity PCI, and simultaneous uplink transmission on a plurality of antenna panels of the terminal.

Optionally, the priority information includes at least one of the following:
priorities between a plurality of TRPs;
priority of uplink transmission;
priorities between uplink transmission and downlink transmission; and
priorities between a plurality of synchronization signal block SSB lists, where the plurality of SSB lists correspond to a plurality of different PCIs respectively, and any one SSB list corresponds to one TRP/TRP group.

Optionally, the processing indication during resource overlapping is used to indicate:
whether to perform coderate matching/rate-matching on the PDSCH in a case that an overlapping time domain resource is present between a physical downlink shared channel PDSCH transmission on the first TRP and an SSB transmission on the second TRP.

Optionally, the first signaling is used to indicate a PCI through at least one of the following:
a transmission configuration indicator TCI state or TCI state list;
a correspondence between TCI states and PCIs; and
a correspondence between TCI state lists and PCIs.

Optionally, the TCI state corresponds to a PCI of the first TRP, or the TCI state corresponds to a PCI of at least one TRP in the plurality of TRPs other than the first TRP; and/or
the TCI state list includes at least one TCI state, and each TCI state corresponds to a PCI of at least one TRP.

Optionally, the uplink transmission operation includes one of the following:
transmitting an uplink transmission on the first TRP; and
not transmitting an uplink transmission on the first TRP.

Optionally, the not transmitting an uplink transmission on the first TRP includes at least one of the following:
discarding/cancelling/ignoring the uplink transmission on the first TRP;
receiving a downlink transmission from the second TRP;
in a case that the uplink transmission on the first TRP is repetition transmission, performing repetition counting in a slot in which the overlapping time domain resource is located, or not performing repetition counting in the slot in which the overlapping time domain resource is located;
in a case that the uplink transmission on the first TRP is a transport block over multiple slots TBoMS, performing transmission occasion/slot counting in the slot in which the overlapping time domain resource is located, or not performing transmission occasion/slot counting in the slot in which the overlapping time domain resource is located; and
in a case that repetition transmission with counting based on available slots is configured for the terminal, determining the slot in which the overlapping time domain resource is located to be an unavailable slot.

Optionally, in a case that the first signaling is used to indicate a PCI, whether the slot in which the uplink transmission on the first TRP is located is an available slot is determined according to the SSB transmission on the first TRP, an SSB transmission on a third TRP, an uplink-downlink frame structure configured by using a higher-layer parameter, and time domain resource information corresponding to the uplink transmission on the first TRP; where
the third TRP is at least one TRP having a same PCI as the first TRP in the plurality of TRPs.

Optionally, the downlink transmission includes SSB transmission.

Optionally, the uplink transmission includes at least one of the following:
physical uplink shared channel PUSCH repetition transmission;
TBoMS uplink transmission;
TBoMS-based PUSCH repetition transmission; and
physical uplink control channel PUCCH repetition transmission.

Optionally, the PUSCH repetition transmission includes at least one of the following:
first-type PUSCH repetition transmission, second-type PUSCH repetition transmission, PUSCH repetition transmission for message 3 (Msg3), and PUSCH repetition transmission based on random access response RAR scheduling in contention-free random access CFRA; where the first-type PUSCH repetition transmission is PUSCH repetition transmission for repetition counting based on consecutive slots, and the second-type PUSCH repetition transmission is PUSCH repetition transmission for repetition counting based on available slots.

Optionally, the radio frequency apparatus 802 is further configured to:
receive capability information reported by the terminal, where the capability information is used to indicate at least one of the following:
   whether the terminal supports counting based on available slots; and
   whether the terminal has a capability of simultaneous transmission on a plurality of panels.

The network-side device can improve transmission performance of the terminal.

An embodiment of this application further provides a readable storage medium, where a program or an instruction is stored in the readable storage medium. When the program or the instruction is executed by a processor, the processes of the foregoing embodiment of the transmission determining method can be implemented, with the same technical effects achieved. To avoid repetition, details are not described herein again.

The processor is a processor in the terminal described in the foregoing embodiments. The readable storage medium includes a computer-readable storage medium, for example, a computer read only memory ROM, a random access memory RAM, a magnetic disk, or an optical disc.

An embodiment of this application further provides a chip, where the chip includes a processor and a communication interface. The communication interface is coupled to the processor, and the processor is configured to run a program or instructions to implement the processes of the foregoing transmission determining method embodiments, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program product, where the computer program product is stored in a readable storage medium, and when being executed by at least one processor, the computer program product is configured to implement the processes of the foregoing transmission determining method embodiments, with the same technical effects achieved. To avoid repetition, details are not repeated herein.

An embodiment of this application further provides a transmission determining system, including a terminal and a network-side device, where the terminal can be configured to execute the steps of the foregoing transmission determining method on the terminal side, and the network-side device can be configured to execute the steps of the foregoing transmission determining method on the network-side device side.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A transmission determining method, comprising:
receiving, by a terminal, first signaling, wherein the first signaling is used for determining an uplink transmission operation of the terminal on a first transmission and reception point TRP; and
determining, by the terminal, an uplink transmission operation of the terminal on the first TRP according to the first signaling in a case that an overlapping time domain resource is present between an uplink transmission of the terminal on the first TRP and a downlink transmission of the terminal on a second TRP; wherein
the terminal is connected to a plurality of TRPs, and the plurality of TRPs comprise the first TRP and the second TRP.

2. The method according to claim 1, wherein the first signaling is used to indicate at least one of the following:
priority information, a processing indication during resource overlapping, a physical cell identity PCI, and simultaneous uplink transmission on a plurality of antenna panels of the terminal.

3. The method according to claim 2, wherein the priority information comprises at least one of the following:
priorities between a plurality of TRPs;
priority of uplink transmission;
priorities between uplink transmission and downlink transmission; and
priorities between a plurality of synchronization signal block SSB lists, wherein the plurality of SSB lists correspond to a plurality of different PCIs respectively, and any one SSB list corresponds to one TRP/TRP group.

4. The method according to claim 2, wherein the processing indication during resource overlapping is used to indicate:
whether to perform coderate matching/rate-matching on the PDSCH in a case that an overlapping time domain resource is present between a physical downlink shared channel PDSCH transmission on the first TRP and an SSB transmission on the second TRP.

5. The method according to claim 2, wherein the first signaling is used to indicate a PCI through at least one of the following:
a transmission configuration indicator TCI state or TCI state list;
a correspondence between TCI states and PCIs; and
a correspondence between TCI state lists and PCIs.

6. The method according to claim 5, wherein the TCI state corresponds to a PCI of the first TRP, or the TCI state corresponds to a PCI of at least one TRP in the plurality of TRPs other than the first TRP; and/or
the TCI state list comprises at least one TCI state, and each TCI state corresponds to a PCI of at least one TRP.

7. The method according to any one of claims 1 to 6, wherein the uplink transmission operation comprises one of the following:
transmitting an uplink transmission on the first TRP; and
not transmitting an uplink transmission on the first TRP.

8. The method according to claim 7, wherein in a case that content indicated by the first signaling meets a first condition, the uplink transmission on the first TRP is transmitted; and/or
in a case that the content indicated by the first signaling meets a second condition, the uplink transmission on the first TRP is not transmitted; wherein
in a case that the first signaling is used to indicate at least one of priority information, a processing indication during resource overlapping, a physical cell identity PCI, and simultaneous uplink transmission on a plurality of antenna panels of the terminal:
the first condition comprises at least one of the following:
the priority information indicates that the first TRP has a highest priority;
the priority information indicates that a priority of the uplink transmission on the first TRP is higher than a priority of the downlink transmission on the second TRP;
the priority information indicates that an uplink transmission has a high priority;
the processing indication during resource overlapping is used to indicate not performing coderate matching/rate-matching on the PDSCH in a case that an overlapping time domain resource is present between the PDSCH transmission on the first TRP and the SSB transmission on the second TRP;
the first TRP and the second TRP have different PCIs; and
the priority information indicates that a priority of an SSB list for the first TRP is higher than a priority of an SSB list for the second TRP; and
the second condition comprises at least one of the following:
the priority information indicates that a priority of the uplink transmission on the first TRP is not higher than a priority of the downlink transmission on the second TRP;
the priority information indicates that a downlink transmission has a high priority;
the processing indication during resource overlapping is used to indicate performing coderate matching/rate-matching on the PDSCH in a case that an overlapping time domain resource is present between the PDSCH transmission on the first TRP and the SSB transmission on the second TRP;
the first TRP and the second TRP have a same PCI;
the first TRP and the second TRP are located in a same cell but have different PCIs; and
the priority information indicates that a priority of an SSB list for the first TRP is not higher than a priority of an SSB list for the second TRP.

9. The method according to claim 7, wherein the not transmitting an uplink transmission on the first TRP comprises at least one of the following:
discarding/cancelling/ignoring the uplink transmission on the first TRP;
receiving a downlink transmission from the second TRP;
in a case that the uplink transmission on the first TRP is repetition transmission, performing repetition counting in a slot in which the overlapping time domain resource is located, or not performing repetition counting in the slot in which the overlapping time domain resource is located;
in a case that the uplink transmission on the first TRP is a transport block over multiple slots TBoMS, performing transmission occasion/slot counting in the slot in which the overlapping time domain resource is located, or not performing transmission occasion/slot counting in the slot in which the overlapping time domain resource is located; and
in a case that repetition transmission with counting based on available slots is configured for the terminal, determining the slot in which the overlapping time domain resource is located to be an unavailable slot.

10. The method according to any one of claims 2 to 6, wherein in a case that the first signaling is used to indicate a PCI, whether the slot in which the uplink transmission on the first TRP is located is an available slot is determined according to the SSB transmission on the first TRP, an SSB transmission on a third TRP, an uplinkdownlink frame structure configured by using a higher-layer parameter, and time domain resource information corresponding to the uplink transmission on the first TRP; wherein
the third TRP is at least one TRP having a same PCI as the first TRP in the plurality of TRPs.

11. The method according to any one of claims 1 to 6, wherein the downlink transmission comprises SSB transmission.

12. The method according to any one of claims 1 to 6, wherein the uplink transmission comprises at least one of the following:
physical uplink shared channel PUSCH repetition transmission;
TBoMS uplink transmission;
TBoMS-based PUSCH repetition transmission; and
physical uplink control channel PUCCH repetition transmission.

13. The method according to claim 12, wherein the PUSCH repetition transmission comprises at least one of the following:
first-type PUSCH repetition transmission, second-type PUSCH repetition transmission, PUSCH repetition transmission for message 3 (Msg3), and PUSCH repetition transmission based on random access response RAR scheduling in contention-free random access CFRA; wherein the first-type PUSCH repetition transmission is PUSCH repetition transmission for repetition counting based on consecutive slots, and the second-type PUSCH repetition transmission is PUSCH repetition transmission for repetition counting based on available slots.

14. The method according to any one of claims 1 to 6, wherein the method further comprises:
reporting, by the terminal, capability information, wherein the capability information is used to indicate at least one of the following:
whether the terminal supports counting based on available slots; and
whether the terminal has a capability of simultaneous transmission on a plurality of panels.

15. A transmission determining method, comprising:
sending, by a network-side device, first signaling to a terminal, wherein the first signaling is used for determining an uplink transmission operation of the terminal on a first TRP in a case that an overlapping time domain resource is present between an uplink transmission of the terminal on the first TRP and a downlink transmission of the terminal on a second TRP.

16. The method according to claim 15, wherein the first signaling is used to indicate at least one of the following:
priority information, a processing indication during resource overlapping, a physical cell identity PCI, and simultaneous uplink transmission on a plurality of antenna panels of the terminal.

17. The method according to claim 16, wherein the priority information comprises at least one of the following:
priorities between a plurality of TRPs;
priority of uplink transmission;
priorities between uplink transmission and downlink transmission; and
priorities between a plurality of synchronization signal block SSB lists, wherein the plurality of SSB lists correspond to a plurality of different PCIs respectively, and any one SSB list corresponds to one TRP/TRP group.

18. The method according to claim 16, wherein the processing indication during resource overlapping is used to indicate:
whether to perform coderate matching/rate-matching on the PDSCH in a case that an overlapping time domain resource is present between a physical downlink shared channel PDSCH transmission on the first TRP and an SSB transmission on the second TRP.

19. The method according to claim 16, wherein the first signaling is used to indicate a PCI through at least one of the following:
a transmission configuration indicator TCI state or TCI state list;
a correspondence between TCI states and PCIs; and
a correspondence between TCI state lists and PCIs.

20. The method according to claim 19, wherein the TCI state corresponds to a PCI of the first TRP, or the TCI state corresponds to a PCI of at least one TRP in the plurality of TRPs other than the first TRP; and/or
the TCI state list comprises at least one TCI state, and each TCI state corresponds to a PCI of at least one TRP.

21. The method according to any one of claims 15 to 20, wherein the uplink transmission operation comprises one of the following:
transmitting an uplink transmission on the first TRP; and
not transmitting an uplink transmission on the first TRP.

22. The method according to claim 21, wherein the not transmitting an uplink transmission on the first TRP comprises at least one of the following:
discarding/cancelling/ignoring the uplink transmission on the first TRP;
receiving a downlink transmission from the second TRP;
in a case that the uplink transmission on the first TRP is repetition transmission, performing repetition counting in a slot in which the overlapping time domain resource is located, or not performing repetition counting in the slot in which the overlapping time domain resource is located;
in a case that the uplink transmission on the first TRP is a transport block over multiple slots TBoMS, performing transmission occasion/slot counting in the slot in which the overlapping time domain resource is located, or not performing transmission occasion/slot counting in the slot in which the overlapping time domain resource is located; and
in a case that repetition transmission with counting based on available slots is configured for the terminal, determining the slot in which the overlapping time domain resource is located to be an unavailable slot.

23. The method according to any one of claims 16 to 20, wherein in a case that the first signaling is used to indicate a PCI, whether the slot in which the uplink transmission on the first TRP is located is an available slot is determined according to the SSB transmission on the first TRP, an SSB transmission on a third TRP, an uplinkdownlink frame structure configured by using a higher-layer parameter, and time domain resource information corresponding to the uplink transmission on the first TRP; wherein
the third TRP is at least one TRP having a same PCI as the first TRP in the plurality of TRPs.

24. The method according to any one of claims 15 to 20, wherein the downlink transmission comprises SSB transmission.

25. The method according to any one of claims 15 to 20, wherein the uplink transmission comprises at least one of the following:
physical uplink shared channel PUSCH repetition transmission;
TBoMS uplink transmission;
TBoMS-based PUSCH repetition transmission; and
physical uplink control channel PUCCH repetition transmission.

26. The method according to claim 25, wherein the PUSCH repetition transmission comprises at least one of the following:
first-type PUSCH repetition transmission, second-type PUSCH repetition transmission, PUSCH repetition transmission for message 3 (Msg3), and PUSCH repetition transmission based on random access response RAR scheduling in contention-free random access CFRA; wherein the first-type PUSCH repetition transmission is PUSCH repetition transmission for repetition counting based on consecutive slots, and the second-type PUSCH repetition transmission is PUSCH repetition transmission for repetition counting based on available slots.

27. The method according to any one of claims 15 to 20, wherein the method further comprises:
receiving, by the network-side device, capability information reported by the terminal, wherein the capability information is used to indicate at least one of the following:
whether the terminal supports counting based on available slots; and
whether the terminal has a capability of simultaneous transmission on a plurality of panels.

28. A transmission determining apparatus, comprising:
a receiving module, configured to receive first signaling, wherein the first signaling is used for determining an uplink transmission operation of a terminal on a first transmission and reception point TRP; and
a determining module, configured to determine an uplink transmission operation of the terminal on the first TRP according to the first signaling in a case that an overlapping time domain resource is present between an uplink transmission on the first TRP and a downlink transmission of the terminal on a second TRP; wherein
the terminal is connected to a plurality of TRPs, and the plurality of TRPs comprise the first TRP and the second TRP.

29. A transmission determining apparatus, comprising:
a sending module, configured to send first signaling to a terminal, wherein the first signaling is used for determining an uplink transmission operation of the terminal on a first TRP in a case that an overlapping time domain resource is present between an uplink transmission of the terminal on the first TRP and a downlink transmission of the terminal on a second TRP.

30. A terminal, comprising a processor, a memory, and a program or instructions stored in the memory and capable of running on the processor, wherein when the program or the instructions are executed by the processor, the steps of the transmission determining method according to any one of claims 1 to 14 are implemented.

31. A network-side device, comprising a processor, a memory, and a program or instructions stored in the memory and capable of running on the processor, wherein when the program or the instructions are executed by the processor, the steps of the transmission determining method according to any one of claims 15 to 27 are implemented.

32. A readable storage medium, wherein the readable storage medium stores a program or instructions, and when the program or instructions are executed by a processor, the steps of the transmission determining method according to any one of claims 1 to 14 are implemented, or the steps of the transmission determining method according to any one of claims 15 to 27 are implemented.
